# EUROPÄISCHE PATENTANMELDUNG

(11) **EP 2 239 032 A1**
(43) Veröffentlichungstag der Anmeldung: **13.10.2010**
(21) Anmeldenummer: 10159107.1
(22) Anmeldetag: 06.04.2010
(51) Int. Cl.: B01D 24/46, B01D 24/00, C02F 3/00

(54) **Filterelement, sowie Filtereinrichtung**

(30) Priorität: 09.04.2009 CH 5852009
(71) Anmelder: Natural Blue GmbH, 6340 Baar (CH)
(72) Erfinder: Scheuter, Beat, 3123, Belp (CH); Mikula, Judith, 8500, Frauenfeld (CH)
(74) Vertreter: Hasler, Erich

(57) **Zusammenfassung**

Ein Filterelement (11) besitzt einen vorzugsweise geschlossenen, plattenförmigen Behälter (13) mit einem Vorlaufanschluss (21) für einen Wasservorlauf und einem Rücklaufanschluss (23) für einen Wasserrücklauf daran. Im Behälter (13) befindet sich ein Filtersubstrat zur biologischen Aufbereitung von vom Vorlaufanschluss (21) zum Rücklaufanschluss (23) strömendem Wasser. Der Behälter (13) besitzt in einer ersten Richtung senkrecht zu einer Ebene mit einem grössten Querschnitt des Behälters eine Schichtenabfolge. Die Schichtenabfolge umfasst einen Verteilraum (25), einen Filterraum (29) und einen Sammelraum (35). Diese Räume erstrecken sich jeweils über den grössten Querschnitt des Filterelements (11).

## Beschreibung

Die Erfindung betrifft ein Filterelement gemäss Oberbegriff von Anspruch 1, sowie eine Filtereinrichtung gemäss Oberbegriff von Anspruch 8.

Aus dem Stand der Technik sind verschiedenste Arten von Filtereinrichtungen bekannt (US 6,426,005 B1, GB 1 212 869, WO 2007/135202, US 5,217,607). Dabei handelt es sich meist um grosse, zylindrische Behälter mit gewölbten oder kegelstumpfförmigen Böden, welche mit einem granulären Medium wie Sand gefüllt sind, durch welches das zu reinigende Wasser geleitet wird. Darüber hinaus ist es bekannt, im Freien liegende Becken mit einem Filtergranulat zu füllen (EP 0 771 761 A1) und mit einem darin eingebetteten Wasserverteilsystem in Form von perforierten Rohren zu versehen, durch welches das Wasser in die Filterschichten geleitet und aus diesen wieder abgezogen werden kann. Solche Vorrichtungen sind jedoch nicht platzsparend unterzubringen und kaum an unterschiedliche Anforderungen in Bezug auf die zu filternde Wassermenge anpassbar.

Es ist ein Bedürfnis vorhanden, Pools mit chemisch aufbereitetem Wasser, wie Swimmingpools, umzurüsten auf eine biologische Aufbereitung des Wassers. Die biologische Wasseraufbereitung hat die Vorteile, dass dabei keine Umweltbelastung entsteht, dass keine Chemikalien erforderlich sind und kein Verbrauch entsteht.
Es ist Aufgabe der vorliegenden Erfindung, eine Einrichtung zu schaffen, mit der neue Pools mit einer biologischen Wasseraufbereitung ausgerüstet und bestehende Pools mit chemischer Wasseraufbereitung auf eine biologische Wasseraufbereitung umgerüstet werden können.

Grundidee der Erfindung ist die Bereitstellung von biologischen Filtereinrichtungen als Elemente. Solche Elemente können dann in beliebiger Anzahl parallel an einen Filterkreislauf angeschlossen werden und sind daher für Pools jeglicher Grösse geeignet. Solche Elemente können auch mit weiteren Funktionselementen kombiniert werden, und sind daher auch auf unterschiedliche Belastungssituationen anpassbar.

Das Grundelement der Erfindung ist daher ein Filterelement zur biologischen Aufbereitung von Wasser, insbesondere Poolwasser von Swimmingpools. Dieses Filterelement besteht im Wesentlichen aus einem (vorzugsweise geschlossenen) plattenförmigen Behälter mit einem Vorlaufanschluss für einen Wasservorlauf und einem Rücklaufanschluss für einen Wasserrücklauf daran. Im Behälter ist ein Filtersubstrat zur biologischen Aufbereitung von vom Vorlaufanschluss zum Rücklaufanschluss strömendem Wasser vorhanden. Erfindungsgemäss besitzt der Behälter in einer ersten Richtung senkrecht zu einer Ebene mit einem grössten Querschnitt des Behälters eine Schichtenabfolge. Diese Schichtenabfolge umfasst einen Verteilraum, einen Filterraum und einen Sammelraum, welche Räume sich jeweils über den grössten Querschnitt erstrecken. Der Verteilraum und der Sammelraum besitzen einen sehr geringen Durchflusswiderstand, so dass der Filterraum über seine Beschickungsfläche (das ist die Fläche des Filterraums, die sich verteilraumseitig über den grössten Querschnitt des Behälters erstreckt) mit gleichem Druck beschickt ist. Das Filtersubstrat im Filterraum wird daher möglichst grossflächig, gleichmässig und über eine relativ geringe Schichtdicke durchströmt und setzt dem Wasser daher lediglich einen geringen Widerstand entgegen, wenn auch einen grösseren als der Verteilraum oder der Sammelraum. Die grossflächige Durchströmung erlaubt eine geringe Durchflussgeschwindigkeit und daher eine genügende Verweilzeit in der biologisch aktiven Filterzone.

Vorzugsweise sind der Verteilraum, der Filterraum und der Sainmelraum in der ersten Richtung statisch belastbar ausgebildet. Bei der Filterschicht ist dies durch eine vorgegebene Verdichtung des Substrats gegeben. Bei den im Idealfall als Hohlräume ausgebildeten Verteil- und Sammelräumen sind dazu Kraft übertragende Einbauten erforderlich. Solche können in Form von Profileinlagen, Schüttungen oder bevorzugt von Füllkörper-Ringen vorliegen.

Die statische Belastbarkeit in der ersten Richtung der plattenförmigen Behälter, das ist in Richtung der Schichtabfolge, hat den Vorteil, dass die Elemente gestapelt, vergraben oder gar begangen werden können. Beschädigungen des Filterelements durch Betreten desselbigen sind dadurch ebenfalls ausgeschlossen. Damit ist eine sehr grosse Freiheit bezüglich der Anordnung der Filterelemente erreicht. Dies ist gerade für die Nachrüstung oder die Änderung von Poolanlagen hilfreich.

Zwischen dem Verteilraum und dem Filterraum und zwischen dem Filterraum und dem Sammelraum sind mit Vorteil Wandungen ausgebildet, die wasserdurchlässig und für das Filtermaterial undurchlässig ausgebildet sind. Dies erlaubt den Verteilraum und den Sammelraum weitgehend ohne Inhalt vorzusehen. Dies dient der Gewichtsersparnis. Alternativ könnte auch innerhalb des Behälters die Schichtabfolge mit einem Granulat mit geringerem Durchflusswiderstand im Verteilraum und im Sammelraum, und mit einem Filtersubstrat dazwischen mit einem höheren Durchflusswiderstand gebildet werden. Eine solche Konstruktion ist aber schwerer als die bevorzugte und braucht höhere Drücke, um durchströmt zu werden, als es bei derjenigen Ausführungsform mit Leerräumen und Wandungen zwischen den Schichten der Fall ist.

Das Filterelement ist zweckmässigerweise wie folgt konstruiert. Es besitzt einen Rahmen, der sich in der ersten Richtung über den Verteilraum, den Filterraum und den Sammelraum erstreckt und diese ringsum abschliesst. Ein solcher Rahmen kann aus Metall, insbesondere Edelstahl gebildet sein, oder aber auch aus Kunststoff. Das Material muss lediglich für das Poolwasser resistent, nicht anfällig für Verschmutzungen und trinkwasserneutral sein. Die Wandungen, meist aus demselben Material wie der Rahmen, sind am Rahmen befestigt. Es kann sein, dass die Wandungen lediglich durch die Distanzhalter und Füllmittel zwischen die Deckel geklemmt sind. Der Rahmen ist vorzugsweise mit zwei parallel zu den Wandungen liegenden Deckeln zu einem geschlossenen Behälter verschlossen die Verbindungen zwischen den einzelnen Teilen sind je nach Material zu wählen. Verschraubungen, Verklebungen, Verschweissungen, Steckverbindungen, etc. sind möglich.

Nach einer weiteren bevorzugten Ausgestaltungsform ist beim Filterelement nur ein Deckel vorgesehen. Dieser ist vorzugsweise parallel zu den (optional zwischen Verteilraum, Filterraum und Sammelraum vorhandenen) Wandungen angeordnet. Das Filterelement besitzt auch in diesem Fall einen Rahmen, der sich in der ersten Richtung über den Verteilraum, den Filterraum und den Sammelraum erstreckt und diese ringsum abschliesst. Der genannte Deckel bildet hierbei den Boden des Filterelements und soll im Folgenden auch als Bodenplatte bezeichnet werden. Die Bodenplatte ist vorzugsweise isoliert.

Werden Filterelemente dieser Art übereinander gestapelt, so besteht die Möglichkeit, dass die Bodenplatte eines Filterelements das darunter liegende Filterelement an dessen Oberseite verschliesst, d.h. die Funktion des oben genannten zweiten Deckels übernimmt. Es können zu diesem Zweck eine oder mehrere Dichtungen im Bereich der Bodenplatte und/oder in Bereich der Oberseite des Filterelements vorgesehen sein. Solche Filterelemente können jedoch auch nebeneinander angeordnet werden und oben offen sein bzw. bleiben. Der Rahmen weist vorzugsweise eine Form auf, die das seitliche Aneinanderfügen mehrerer Filterelemente ermöglicht. Insbesondere soll der Rahmen so ausgestaltet sein, dass zwei seitlich aneinandergefügte Filterelemente über mindestens 10%, vorzugsweis über mindestens 14% und insbesondere mindestens 23% ihres Umfangs miteinander in Kontakt stehen können. Dazu weist der Rahmen vorzugsweise die Form eines Vielecks, insbesondere eines Quadrats, eines Rechtecks, eines regelmässigen Fünf-, Sechs- oder Achtecks auf. Auch andere Vierecke mit je zwei Paaren von gleichen Winkeln sind möglich.

Nach einer weiteren Ausgestaltungsform bildet der Rahmen Seitenwände, wobei die Seitenwände und die Bodenplatte vorzugsweise in einem Winkel von 70-90°, insbesondere von 80-90° zueinander angeordnet sind. Die Innenseiten des Rahmens bzw. der Seitenwände besitzen vorzugsweise eine raue Oberfläche. Der obere und/oder untere Rand des Rahmens bzw. der Seitenwände weist vorzugsweise einen Wulst auf. Dieser kann eine Funktion ähnlich wie bei Becken bzw. Überlaufbehältern ausüben, wenn das Filterelement oben offen ist, d.h. wenn nur ein Deckel (Bodenplatte) vorgesehen ist. Er kann aber auch der Stabilisierung dienen. Darüber hinaus können aussen, entlang der Seitenwände Schaumstoffstreifen zur Stabilisierung vorgesehen sein.

Der bevorzugte Abstand zwischen dem oberen und dem unteren Rand des Rahmens bzw. der Seitenwände (dessen maximaler Wert hier definiert ist als die maximale Ausdehnung des Filterelements in Richtung der z-Achse) beträgt 30-60 cm, vorzugsweise 40-50 cm, während die maximale Ausdehnung des Filterelements in Richtung der x- bzw. y-Achse bevorzugt 100-300 cm und insbesondere 150- 250 cm beträgt. Der Abstand zwischen oberem und unterem Rand des Rahmens bzw. der Seitenwände ist vorzugsweise konstant. Es kann auch bevorzugt sein, wenn die maximale Ausdehnung des Filterelements in Richtung der x-Achse und/oder der y-Achse ein Vielfaches der maximalen Ausdehnung in Richtung der z-Achse beträgt, insbesondere kann die maximale Ausdehnung des Filterelements in Richtung der x-Achse und/oder der y-Achse mindestens 2,3,4 oder 5 mal so gross sein wie die maximale Ausdehnung in Richtung der z-Achse.

Vorzugsweise weist das Filterelement Markierungen, insbesondere in der Form von horizontalen Strichen, auf. Bevorzugt sind diese auf der Innenseite des Filterelements, insbesondere auf der Innenseite mindestens einer Seitenwand, angeordnet. Die Markierungen erleichtern das Einbringen des Filtermaterials.

Nach einer bevorzugten Ausgestaltung weist das Filterelement, insbesondere die Verteilzone, regelmässig angeordnete, vorzugsweise gekreuzte, sich in die erste Richtung erstreckende Wände (vorzugsweise aus Chromstahl) auf, die parallel angeordnete Hohlräume bilden (z.B. Raster oder Honigwabenstruktur). Diese können als Kraft übertragende Einbauten und/oder der gleichmässigen Verteilung des Wassers dienen. Die von den Wänden gebildeten Hohlräume besitzen vorzugsweise eine Querschnittsfläche von 100-350 cm², insbesondere von 175-275 cm². Besonders bevorzugt ist ein Raster mit einer Rastergrösse von etwa 15/15 cm, d.h. einer Querschnittsfläche von etwa 225 cm². Die Wände weisen vorzugsweise eine Materialstärke von 0,5-2,5 cm und insbesondere von 1,0-2,0 cm auf. Mit Vorteil besitzen die genannten Wände Öffnungen, insbesondere in Form von Schlitze, wobei bevorzugte Abmessungen solcher Öffnungen maximal 5,4, oder 3 cm und minimal 0,5, 1 oder 2 cm betragen.

Der Filterraum ist zweckmässigerweise mit einem Filtergranulat ausgefüllt, welches verdichtet sein kann. Die Verdichtung bewirkt, dass im Filterelement unerwünschte Verschiebungen des Granulats vermieden sind. Das Granulat kann in mehreren Schichten vorliegen. Es können zwischen den Schichten wasserdurchlässige Wandungen vorgesehen sein, deren Wasserdurchlässe geringere Durchmesser aufweisen als das Korn des Granulats.

Filtergranulat (in loser oder verdichteter Form) liegt vorteilhaft in wenigstens zwei Schichten mit unterschiedlicher Körnung vor. Es kann zweckmässig sein, drei oder vier Schichten mit abgestuften Korngrössen vorzusehen. Die Korngrösse nimmt dabei in Durchflussrichtung ab, damit eine Rückspülung möglich und eine Verstopfung der Filterschicht unwahrscheinlich ist.

Zweckmässigerweise ist das Filterelement mit einer Libelle versehen. So ist sichergestellt, dass das Filterelement während des Einbaus genau waagrecht ausgerichtet wird. Dies ist von Bedeutung, denn nur in waagrechter Position verteilt sich das Wasser auf die gesamte Fläche der einzelnen Schichten gleichmässig.

Inhalt der vorliegenden Erfindung ist auch eine Filtereinrichtung mit einer Mehrzahl von Filterelementen gemäss einem der Ansprüche 1 bis 7. Die Filterelemente sind in der Filtereinrichtung parallel an eine Vorlaufleitung und eine Rücklaufleitung angeschlossen. Die parallele Schaltung von einer Mehrzahl von Filterelementen hat den Vorteil, dass die Filteranlage an das jeweilige Volumen des zu reinigende Wassers adaptierbar ist, ohne die Verweilzeit in einem Filterelement verkürzen zu müssen.

Dadurch, dass die Filterelemente übereinander gestapelt oder nebeneinander ausgelegt sind, können die Filterelemente auch nachträglich an jede Abwasserquelle angeschlossen werden. Der Einbau der Filterelemente gestaltet sich daher äusserst flexibel unter möglicher Ausnutzung von bestehenden baulichen Gegebenheiten. Die Filterelemente können demzufolge genauso in einem Swimmingpool wie auch ausserhalb eines Swimmingpools) angeordnet sein. Möglich ist Darüber hinaus beispielsweise die Anordnung in einem Schacht.

Die Ergänzung der Filterelemente mit einem Element zur Sauerstoffanreicherung hat den Effekt, dass eine an dem Granulat angesiedelte Biozönose in ihrer Aktivität gesteigert werden kann und die Filtereinrichtung an erhöhte Verunreinigungsbelastungen anpassbar ist.

Die Filterelemente sind vorteilhaft mit einem Element zur Vorfilterung ausgerüstet. Grobe Verunreinigungen, wie Blätter oder Äste können dadurch zuverlässig vom Filterraum ferngehalten werden.

Zusätzlich sind die Filterelemente vorteilhaft mit einem Element zur Limitierung von unerwünschten chemischen Stoffen und/oder mit einem Element zur Dosierung von notwendigen biologischen Zuschlagstoffen ergänzt. So ist die Filtereinrichtung an spezielle Anforderungen des zu reinigenden Wassers adaptierbar.

Mit Vorteil ist an die Filtereinrichtung eine Umwälzanlage angeschlossen. Durch die Umwälzanlage ist das System geschlossen und die Fliessrichtung in der Filtereinrichtung ist leicht umkehrbar. Eine Regenerierung der Filterelemente durch Rückspülung ist dadurch ermöglicht. Die Regenerierung gestaltet sich besonders einfach, wenn die Rückspülfunktion mit Trinkwasser aus einem Versorgungsnetz und einem Netzdruck gewährleistet ist.

Eine automatische Funktionssteuerung, welche für die Filtereinrichtung vorgesehen ist, besitzt den Vorteil, dass der Betrieb der Filtereinrichtung voll automatisch abläuft und die Filtereinrichtung leicht überwachbar ist.

Eine Belüftungseinrichtung für die Filterelemente hat den Effekt, dass der, von der an dem Granulat angesiedelten Biozönose benötigte Sauerstoff über die Umgebungsluft in die Filterelemente einbringbar ist.

Die Erfindung wird anhand eines Ausführungsbeispiels nachfolgend beispielhaft erläutert. Es zeigt in schematischer Darstellung:
- Fig. 1: eine Vorderansicht einer erfindungsgemässen Filtereinrichtung;
- Fig. 2: eine Seitenansicht der Filtereinrichtung aus Figur 1; und
- Fig. 3: eine Draufsicht der Filtereinrichtung.

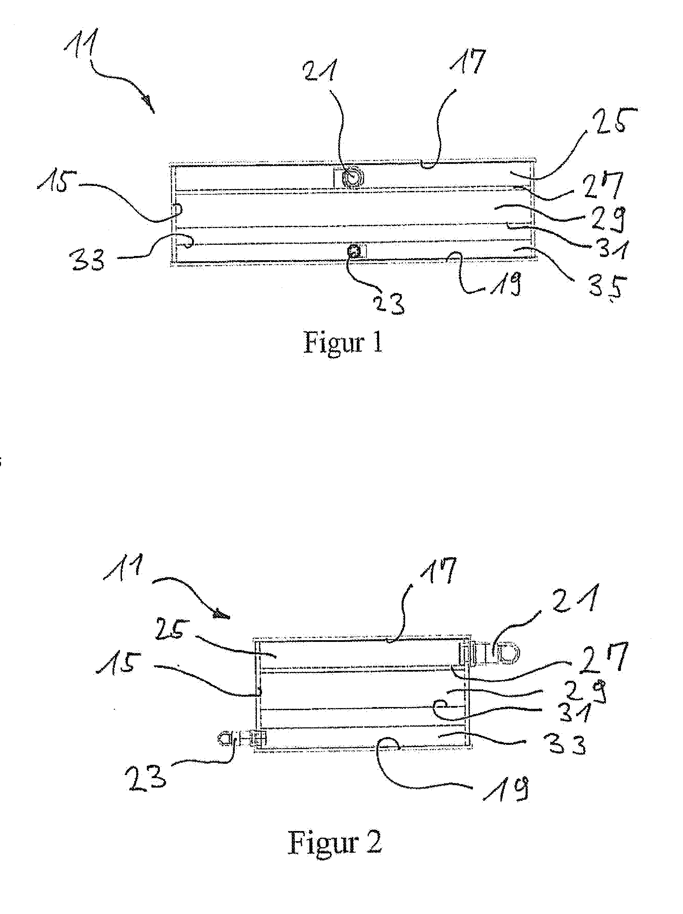

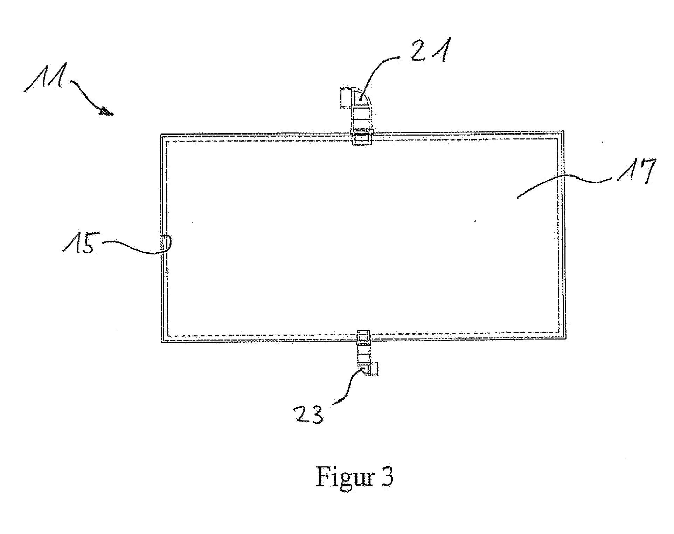

In den Figuren 1 bis 3 ist eine Filterelement 11 gezeigt, das eine bevorzugte Ausführungsform darstellt. Das Filterelement 11 hat einen plattenförmige Behälter 13. Der Behälter 13 ist in den Figuren 1 bis 4 als rechteckiges Prisma dargestellt, es wären aber auch andere Formen wie z.B. ein Kreiszylinder denkbar. Der Behälter besitzt einen Rahmen 15, welcher durch zwei zueinander parallele Deckel 17,19 zu einem geschlossenen Behälter verschlossen ist. In kurzem Abstand zum Deckel 17 ist am Rahmen 15 aussenseitig ein Vorlaufanschluss 21 für einen Wasservorlauf vorgesehen. In kurzem Abstand zum Deckel 19 ist ein Rücklaufanschluss 23 für einen Wasserrücklauf ebenfalls aussenseitig am Rahmen 15 vorgesehen. Der Vorlaufanschluss 21 kann, wie aus den Figuren ersichtlicht, oberhalb des Rücklaufanschlusses 23 angeordnet sein. In diesem Fall kann die Schwerkraft dazu genutzt werden, den Durchlauf des zu reinigenden Abwassers durch die Filteranlage zu erleichtern. Das gesamte Filterelement (11) ist aus trinkwasserneutralen Materialien gefertigt.

Von Bedeutung an dem neuartigen Filterelement 11 ist, dass der Behälter parallel zu den Deckeln 17,19 eine Schichtenabfolge besitzt. Im Anschluss an den Vorlaufanschluss 21 ist innerhalb des Behälters ein Verteilraum 25 vorhanden. Als nächste Schicht ist eine Wandung 27 vorgesehen, welche den Verteilerraum 25 von einem Filterraum 29 trennt. Der Verteilerraum 25 kann idealerweise als Hohlraum ausgebildet sein. Dann sind nicht näher dargestellte, kraftübertragende Einbauten notwendig, welche den Deckel 17 statisch belastbar machen. Als Einbauten können z. B. Füllkörper, Ringe etc. verwendet sein.

Im Anschluss an die Wandung 27 befindet sich ein Filterraum 29. Der Filterraum 29 ist mit einem verdichteten Granulat ausgefüllt. Auch eine lose Schüttung des Granulats wäre denkbar. Im vorliegenden Ausführungsbeispiel liegt das Granulat in zwei Schichten verschiedener Körnung vor, wobei die beiden verschiedenen Körnungsschichten durch eine Wandung 31 voneinander getrennt sein können. Denl<bar ist es auch, dass mehr als zwei verschiedenen Körnungen als Filtermittel eingesetzt sind. Dadurch kann die entsprechende Körnung an den Verschmutzungsgrad des zu reinigenden Abwassers optimal angepasst werden. Vorteilhaft ist, dass die Körnung des Granulats in Durchflussrichtung des zu reinigenden Abwassers abnimmt. So ist eine Regeneration des Granulats gegeben, bei welcher die Durchflussrichtung umgekehrt wird und das Granulat mit reinem Wasser ausgewaschen wird. Der Filterraum ist gegenüber einem Sammelraum 33, welcher sich zuunterst im Behälter 13 befinde, mit einer weiteren Wandung 33 abgegrenzt. Von Bedeutung für die einwandfreie Funktion der Filtereinrichtung ist, dass die Wandungen 27,31,33, für das zu reinigende Abwasser durchlässig sind, nicht jedoch für das Granulat der verschiedenen Körnungen.

Der Sammelraum 35 ist mit dem Rücklaufanschluss 23 verbunden, durch den das zu reinigende Abwasser das Filterelement verlässt. Der Sammelraum 33 kann ebenfalls statisch belastbar ausgeführt sein. Dann sind nicht näher dargestellte, kraftübertragende Einbauten notwendig, welche den Deckel 19 statisch belastbar machen. Als Einbauten können ebenfalls z. B. Füllkörper, Ringe etc. verwendet sein.

Ein Vorteil der statischen Belastbarkeit des Filterelements ist es, dass es z. B. den Druckbelastungen im Erdreich nahe einem Pool standhält.

Das Filterelement 11 kann mit einer Libelle versehen sein. Die Libelle erleichtert es, das Filterelement 11 beim Einbau genau auszurichten. Eine optimale Funktion des Filterelements 11 ist nur dann gewährleistet, wenn die vorhandenen Schichten sich in der Waagrechten befinden. Das aufgegebene Abwasser kaum sich optimal verteilen und das gesamte Granulat steht der Reinigung zur Verfügung.

In Abhängigkeit vom Volumen des zu reinigenden Abwassers können mehrere Filterelemente 11 auch parallel an eine Vorlaufleitung und eine Rücklaufleitung angeschlossen sein. Die Reinigungsleistung der Filterelemente ist z. B. an Pools jeglicher Grösse anpassbar.

Das erfindugsgemässe Filterelement 11 ist äusserst flexibel an die vorliegenden Verunreinigungen im Abwasser anpassbar. So ist das vorliegende Ausführungsbeispiel mit einer Sauerstoffanreicherung bzw. einer Belüftungseinrichtung ausgestattet, um die Aktivität der Mikrobiologie, die neben der Filterwirkung des Granulats für die Reinigung des Wassers verantwortlich ist, zu steigern. Eine Anpassung an verschiedene Belastungssituation ist dadurch ermöglicht. Eine Vorfilterung dient der Entfernung von grösseren Feststoffen, wie z. B. Blätter, die das Granulat in kurzer Zeit verstopfen würden. Auch kann eine Dosiervorrichtung zur Zugabe von biologischen Zuschlagsstoffen vorgesehen sein.

Das Filterelement 11 ist in eine Umwälzanlage integriert. Wird die Fliessrichtung in der Umwälzanlage geändert und mit Trinkwasser beaufschlagt, wird das Filterelement 11 regeneriert, indem das Granulat ausgewaschen wird. Von Bedeutung ist, dass das Trinkwasser nach Regenerierung des Granulats nicht in den Reinigungskreislauf gelangt sondern in die Kanalisation geleitet wird. Trinkwasser neigt zu einem erhöhten Phosphatgehalt und würde im Reinigungskreislauf die Algenbildung begünstigen.

Die oben beschriebene Filteranlage, welche zumindest ein Filterelement 11 beinhaltet kann über eine automatische Funktionssteuerung betrieben sein. Der Betrieb der Filteranlage erfolgt automatisch, die Reinigungsleistung und eine notwendige Regenerierung des Filterelements sind zu jeder Zeit überwacht.

Das Filterelement 11 funktioniert nach Figur 1 wie folgt: Der zentral Gedanke der vorliegenden Erfindung liegt darin, eine lange Verweilzeit des zu reinigenden Abwasser im Filterelement bzw. eine genügende Kontaktzeit mit dem Granulat zu erlauben. Demzufolge ist die Flächenerstreckung im Filterelement 11 normal zur Fliessrichtung möglichst gross dimensioniert. Zuerst wird das zu reinigende Abwasser dem Filterelement 11 über den Rücklaufanschluss 21 aufgegeben. Das Abwasser wird im Verteilerraum 25 möglichst grossflächig über die Wandung 27 verteilt. Während der Verteilung des Abwassers ist es von Bedeutung, dass das Filterelement möglichst waagrecht ausgerichtet ist. Nur so ist sichergestellt, dass das gesamte Granulatvolumen zur Reinigung genutzt werden kann.

Im Filterraum 29 wird das Abwasser zweifach gereinigt, einerseits durch die Filterwirkung des Granulats und andererseits durch die an der Oberfläche des Granulats angesiedelte Biozönose, welche die Verunreinigungen im Abwasser zu ihrer Lebenserhaltung abbaut. In der vorliegenden Ausführungsvariante tritt das Abwasser durch die Wandung 29 in einen zweiten Bereich des Filterraums 29, in dem Granulat mit feinerer Körnung vorliegt. Dadurch wird die Filterwirkung weiter verbessert und die Verweilzeit weiter verlängert.

Durch die Wandung 33 verlässt das gereinigte Wasser den Filterraum und wird im Sammelraum 35 gestaut. Über den Rücklaufanschluss 23 verlässt das gereinigte Wasser das Filterelement 11 und kann z. B. wieder in einen Pool eingespeist werden.

Denkbar wäre es auch, dass das Filterelement die Form eines Kreiszylinders mit zwei kreisförmigen Deckeln und einem Zylindermantel aufweist. Die rotationssymmetrische Form hat den Vorteil, dass der Vorlaufanschluss zentral in axialer Richtung aufgegeben werden kann, Das zu reinigende Wasser wandert im Granulat zentral von innen radial in Richtung des Zylindermantels. Das Granulat kann in einer Mehrzahl von übereinander gestapelten kreisförmigen Filterplatten aufgenommen sein. Die Filterplatten sind für das Wasser, nicht jedoch für das Granulat durchlässig. Nachdem das gereinigte Wasser die Filterplatten verlassen hat, wird es in einem Sammelbecken aufgenommen.

### Legende:

- 11: Filtereinrichtung
- 13: Behälter
- 15: Rahmen
- 17: Deckel
- 19: Deckel
- 21: Vorlaufanschluss
- 23: Rücklaufanschluss
- 25: Verteilerraum
- 27: Wandung
- 29: Filterraum
- 31: Wandung
- 33: Wandung
- 35: Sammelraum

## Patentansprüche

1. Filterelement (11) mit einem Behälter (13) mit einem Vorlaufanschluss (21) für einen Wasservorlauf und einem Rücklaufanschluss (23) für einen Wasserrücklauf daran, und im Behälter (13) einem Filtersubstrat zur biologischen Aufbereitung von vom Vorlaufanschluss (21) zum Rücklaufanschluss (23) strömendem Wasser, **dadurch gekennzeichnet, dass** der Behälter (13) plattenförmig ist und in einer ersten Richtung senkrecht zu einer Ebene mit einem grössten Querschnitt des Behälters eine Schichtenabfolge besitzt, welche einen Verteilraum (25), einen Filterraum (29) und einen Sammelraum (35) umfasst, welche Räume sich jeweils über den grössten Querschnitt erstrecken, wobei der Behälter vorzugsweise geschlossen ist.

2. Filterelement (11) nach Anspruch 1, **dadurch gekennzeichnet, dass** der Verteilraum (25), der Filterraum (29) und der Sammelraum (35) in der ersten Richtung statisch belastbar ausgebildet sind.

3. Filterelement (11) nach Anspruch 1 oder 2, **dadurch gekennzeichnet, dass** zwischen dem Verteilraum (25) und dem Filterraum (29) und zwischen dem Filterraum (29) und dem Sammelraum (25) Wandungen (27,31) ausgebildet sind, die wasserdurchlässig und für das Filtermaterial undurchlässig ausgebildet sind.

4. Filterelement (11) nach Anspruch 3, **dadurch gekennzeichnet, dass** das Filterelement (11) einen Rahmen (15) besitzt, der sich in der ersten Richtung über den Verteilraum (25), den Filterraum (29) und den Sammelraum (35) erstreckt und diese ringsum abschliesst, und dass die Wandungen (27,33) am Rahmen (15) befestigt sind und der Rahmen (15) mit zwei parallel zu den Wandungen (27,33) liegenden Deckeln (17,19) zu einem geschlossenen Behälter (13) verschlossen ist.

5. Filterelement (11) nach einem der Ansprüche 1 bis 4, **dadurch gekennzeichnet, dass** der Filterraum (29) mit einem verdichteten oder einem losen Granulat ausgefüllt ist, wobei das Granulat vorzugsweise in wenigstens zwei Schichten mit unterschiedlicher Körnung vorliegt.

6. Filterelement (11) nach Anspruch 5, **dadurch gekennzeichnet, dass** die Körnung in Durchrlussrichtung zuerst gröber und dann feiner ist.

7. Filterelement (11) nach einem der Ansprüche 1 bis 6, **dadurch gekennzeichnet, dass** das Filterelement (11) mit einer Libelle versehen ist.

8. Filtereinrichtung mit einer Mehrzahl von Filterelementen (11) gemäss einem der Ansprüche 1 bis 7, bei der die Filterelemente (11) parallel an eine Vorlaufleitung und eine Rücklaufleitung angeschlossen sind.

9. Filtereinrichtung nach Anspruch 8, **dadurch** gekennzeichet, dass die Filterelemente (11) übereinander gestapelt sind.

10. Filtereinrichtung nach Anspruch 8, **dadurch gekennzeichnet, dass** die Filterelemente (11) neben einander ausgelegt sind.

11. Filtereinrichtung nach einem der Ansprüche 8 bis 10, **dadurch gekennzeichnet, dass** die Filterelemente (11) mit einem Element zur Sauerstoffanreicherung und/ oder durch eine Belüftungseinrichtung ergänzt sind.

12. Filtereinrichtung nach einem der Ansprüche 8 bis 11, **dadurch gekennzeichnet, dass** die Filterelemente (11) mit einem Element zur Vorfilterung ergänzt sind.

13. Filtereinrichtung nach einem der Ansprüche 8 bis 12 zusätzlich **gekennzeichnet durch** eine Umwälzanlage.

14. Filtereinrichtung nach einem der Ansprüche 8 bis 12 **gekennzeichnet durch** eine Rückspüleinrichtung, wobei die Rückspülfunktion vorzugsweise mit Trinkwasser aus einem Versorgungsnetz und einem Netzdruck gewährleistet ist.

15. Filtereinrichtung nach einem der Ansprüche 8 bis 14, **dadurch gekennzeichnet, dass** eine automatische Funktionssteuerung vorgesehen ist.
